# EUROPEAN PATENT APPLICATION

(11) **EP 4 838 187 A1**
(43) Date of publication of application: **11.11.2026**
(21) Application number: 24914720.8
(22) Date of filing: 15.03.2024
(51) Int. Cl.: G01H 9/00, H04B 10/071, G01D 5/353

(54) **OPTICAL TIME-DOMAIN REFLECTOMETER, AND METHOD FOR ELIMINATING INTERFERENCE FADING**

(30) Priority: 03.01.2024 CN 202410008182
(71) Applicant: Accelink Technologies Co., Ltd., Wuhan, Hubei 430000 (CN)
(72) Inventor: LI, Ming, Wuhan, Hubei 430000 (CN); XU, Jian, Wuhan, Hubei 430000 (CN); NIE, Mingchao, Wuhan, Hubei 430000 (CN); HE, Guoliang, Wuhan, Hubei 430000 (CN); ZHANG, Jibiao, Wuhan, Hubei 430000 (CN); YU, Jiekui, Wuhan, Hubei 430000 (CN)
(74) Representative: Frenkel, Matthias Alexander
(86) International application number: PCT/CN2024/081812
(87) International publication number: WO 2025/145498

(57) **Abstract**

The present disclosure relates to the technical field of optical fiber sensing, and particularly, to an optical time-domain reflectometer and method for eliminating interference fading. The reflectometer comprises a laser device, a frequency-division multiplexing modulator, circulator and signal processing device. The frequency-division multiplexing modulator comprises first and second modulators, first and second attenuators. The laser device is configured to generate a coherent light source, which source sequentially passes through the first modulator and the first attenuator to obtain a first optical pulse signal, sequentially passes through the first and second modulators to obtain a second optical pulse signal, and sequentially passes through the second attenuator and the second modulator to obtain a third optical pulse signal. Through different combinations of the first and second modulators and the first and second attenuators, the output of multi-path optical pulse signals can be realized, saving hardware costs compared with the prior art.

## Description

### CROSS-REFERENCE TO RELATED APPLICATIONS

This disclosure claims priority to the following patent application:
(1) Chinese Patent Application No. 202410008182.0 filed on January 03, 2024 with China National Intellectual Property Administration and titled "OPTICAL TIME-DOMAIN REFLECTOMETER AND METHOD FOR ELIMINATING INTERFERENCE FADING".

### TECHNICAL FIELD

The present disclosure relates to the technical field of optical fiber sensing, and more particularly, to an optical time-domain reflectometer and a method for eliminating interference fading.

### BACKGROUND

The distributed optical fiber sensing technology based on the phase sensitive optical time-domain reflectometer (Φ-OTDR) provides advantages including high measurement precision, rapid response, extended monitoring range, and electromagnetic immunity. This technology is widely deployed in the fields such as perimeter security, rail monitoring and oil/gas pipeline applications. The principle involves how a disturbance signal applied to the optical fiber causes a change in the refractive index of the optical fiber which results in a change in the optical path and detected light phase. The Φ-OTDR, according to the demodulation mode, is classified into intensity demodulation and phase-demodulated types.

In the phase-demodulated Φ-OTDR system, the interference fading effect inevitably occurs, significantly degrading the signal-to-noise ratio at fading points and causing substantial distortion of sensing information. Specifically, a minimum value point inevitably exists in Rayleigh backscatter (RBS) intensity. When the intensity noise of the detector is superimposed, the demodulation algorithm yields phase results with anomalies. It is usually difficult to distinguish the phase jump caused by interference fading from the actual disturbance. Therefore, the Φ-OTDR system based on a single phase signal has a problem of event false alarms caused by interference fading.

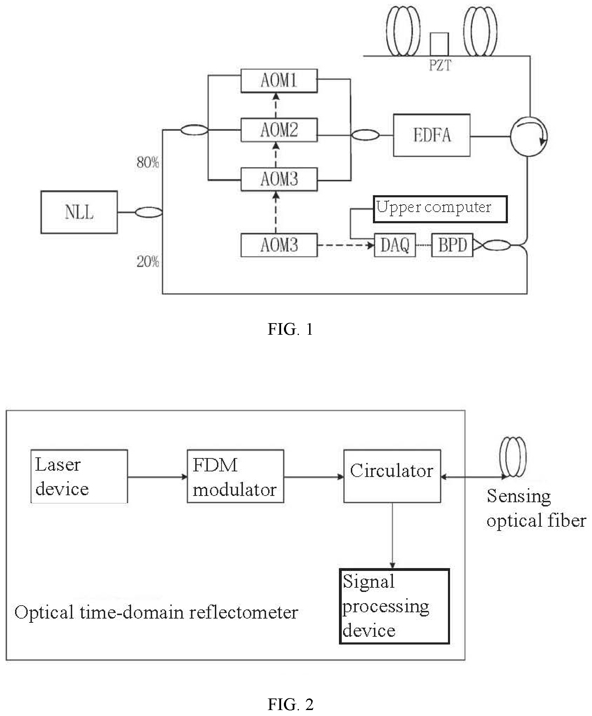

For a coherent detection Φ-OTDR system, method to eliminate interference fading include: performing phase reconstruction by using a frequency-division multiplexing technology and employing detection pulsed light with different optical frequencies. As illustrated in FIG. 1, pulse modulation is performed using three acousto-optic modulators with different frequencies to realize optical pulse output of three frequencies. This hardware architecture is complex, requiring multiple frequency-shifting modulators.

Accordingly, overcoming the defects of the prior art is an urgent problem in this technical field.

### SUMMARY

The technical problem addressed in the present disclosure is how to reduce acousto-optic modulator (AOM) count, while enabling multiple optical pulse signals to output with fewer acousto-optic modulators, and eliminating the influence of interference fading.

The present disclosure provides the following technical solutions.

In a first aspect, an optical time-domain reflectometer is provided. The optical time-domain reflectometer is connected with a sensing optical fiber and comprises a laser device, a frequency-division multiplexing modulator, a circulator and a signal processing device, wherein the frequency-division multiplexing modulator comprises a first modulator, a second modulator, a first attenuator and a second attenuator;
the laser device is configured to generate a coherent light source, and the coherent light source passes sequentially through the first modulator and the first attenuator to obtain a first optical pulse signal; the coherent light source sequentially passes through the first modulator and the second modulator to obtain a second optical pulse signal; and the coherent light source sequentially passes through the second attenuator and the second modulator to obtain a third optical pulse signal; and
the circulator is configured to transmit the first optical pulse signal, the second optical pulse signal, and the third optical pulse signal to the sensing optical fiber, and the sensing optical fiber is configured to generate corresponding reflected optical signals according to the first optical pulse signal, the second optical pulse signal, and the third optical pulse signal, and transmit the reflected optical signals to the signal processing device through the circulator for processing.

In some embodiments, the optical time-domain reflectometer further comprises a first coupler, a first amplifier and a second amplifier;
the first coupler is configured to divide the coherent light source into a first optical signal transmitted to the frequency-division multiplexing modulator, and a second optical signal transmitted to the signal processing device;
the first amplifier is configured to amplify the first optical pulse signal, the second optical pulse signal, and the third optical pulse signal, transmitting the amplified optical signals to the circulator; and
the second amplifier is configured to amplify the reflected optical signals, transmitting the amplified optical signals to the signal processing device.

In some embodiments, the frequency-division multiplexing modulator further comprises a second coupler, a third coupler, a fourth coupler, and a fifth coupler;
the second coupler is configured to divide the first optical signal into a third optical signal and a fourth optical signal, and the third optical signal sequentially passes through the first modulator, the third coupler, the first attenuator and the fourth coupler, so as to obtain the first optical pulse signal;
the third optical signal sequentially passes through the first modulator, the third coupler, the fifth coupler, the second modulator, and the fourth coupler, so as to obtain the second optical pulse signal; and
the fourth optical signal sequentially passes through the second attenuator, the fifth coupler, the second modulator, and the fourth coupler, so as to obtain the third optical pulse signal.

In some embodiments, the signal processing device comprises a polarization diversity coherent receiving unit and a signal acquisition and processing unit;
the polarization diversity coherent receiving unit is configured to divide the reflected optical signal into X polarization and Y polarization optical signals which are orthogonal; and mix the X polarization optical signal with the second optical signal to obtain a X-polarization first beat frequency electrical signal, and mix the Y polarization optical signal with the second optical signal to obtain a Y-polarization second beat frequency electrical signal;
the signal acquisition and processing unit is configured to, in a calibration mode of the optical time-domain reflectometer, receive the first beat frequency electrical signal and the second beat frequency electrical signal, perform multi-frequency bandwidth filtering on the first beat frequency electrical signal and the second beat frequency electrical signal to obtain a plurality of sub-frequency band signals, and obtain intensity information of each sub-frequency band signal according to a first algorithm, and adjust attenuation ratios of the first attenuator and the second attenuator according to the intensity information; and
the signal acquisition and processing unit is further configured to receive the first beat frequency electrical signal and the second beat frequency electrical signal in a detection mode of the optical time-domain reflectometer, performing multi-frequency bandwidth filtering on the first beat frequency electrical signal and the second beat frequency electrical signal to obtain a plurality of sub-frequency band signals, respectively obtaining phase signals of each sub-frequency band signal through the first algorithm, and performing average superposition to obtain a demodulated phase signal sequence.

In some embodiments, a working frequency of the first modulator is f1, and a working frequency of the second modulator is f2, wherein a sum of f1 + f2 is smaller than a working bandwidth of the polarization diversity coherent receiving unit, and the sum of f1+f2 is smaller than a working bandwidth of the signal acquisition and processing unit, and f1 is not equal to f2.

In a second aspect, a method for eliminating interference fading is provided. The signal processing device comprises a polarization diversity coherent receiving unit and a signal acquisition and processing unit. The method for eliminating interference fading comprises:
dividing, by the polarization diversity coherent receiving unit, the reflected optical signal into two orthogonal X polarization optical signals and Y polarization optical signals; mixing the X polarization optical signal with the second optical signal to obtain a X-polarization first beat frequency electrical signal, and mixing the Y polarization optical signal with the second optical signal to obtain a Y-polarization second beat frequency electrical signal;
in a calibration mode of the optical time-domain reflectometer, by the signal acquisition and processing unit, receiving the first beat frequency electrical signal and the second beat frequency electrical signal and performing multi-frequency bandwidth filtering upon them, then calculating each sub-frequency band signal obtained by filtering using a first algorithm to obtain intensity information of each sub-frequency band signal, and adjusting attenuation ratios of the first attenuator and the second attenuator according to the intensity information, so as to perform sub-frequency band power equalization; and
in a detection mode of the optical time-domain reflectometer, by the signal acquisition and processing unit, receiving the first beat frequency electrical signal and the second beat frequency electrical signal and performing multi-frequency bandwidth filtering upon them, then calculating each sub-frequency band signal by using the first algorithm to obtain phase information of each sub-frequency band signal, and performing average superposition on the phase information to eliminate influence of interference fading.

In some embodiments, the performing multi-frequency bandwidth filtering on the first beat frequency electrical signal and the second beat frequency electrical signal, comprises:
performing multi-frequency bandwidth filtering on the first beat frequency electrical signal and the second beat frequency electrical signal to obtain a plurality of sub-frequency band signals, through 3 bandwidth filters whose center frequencies are respectively a working frequency f1 of the first modulator, a working frequency f2 of the second modulator, and the working frequency f1 of the first modulator + the working frequency f2 of the second modulator.

In some embodiments, said in a calibration mode of the optical time-domain reflectometer, by the signal acquisition and processing unit, receiving the first beat frequency electrical signal and the second beat frequency electrical signal and performing multi-frequency bandwidth filtering upon them, then calculating each sub-frequency band signal obtained by filtering by using a first algorithm to obtain intensity information of each sub-frequency band signal, and adjusting attenuation ratios of the first attenuator and the second attenuator according to the intensity information, so as to perform sub-frequency band power equalization, specifically comprises:
in the calibration mode of the optical time-domain reflectometer, collecting, by the signal acquisition and processing unit, a first beat frequency electrical signal {x(k); k=1,....,m} and a second beat frequency electrical signal {x(k); and k=1,....,m};
where k represents a number of sampling points, and m represents a maximum number of sampling points;
sorting all the first beat frequency electrical signals and the second beat frequency electrical signals by time and establishing a one-to-one correspondence between them;
performing sub-frequency band filtering respectively on the first beat frequency electrical signal and the second beat frequency electrical signal, and performing Hilbert transformation on the first beat frequency electrical signal and the second beat frequency electrical signal point by point to obtain sub-frequency band signals {H(x(k)); k=1,..., m} and {H(y(k)); and k=1,...,m}, and obtaining the intensity information Pi according to Eq. 1, Eq. 2, and Eq. 3:
   wherein ${S}_{ix} = \sqrt{{\left(H\left(X\left(k\right)\right)\right)}^{2} + {\left(X\left(k\right)\right)}^{2}} ;$ Eq. 1
   ${S}_{iy} = \sqrt{{\left(H\left(Y\left(k\right)\right)\right)}^{2} + {\left(Y\left(k\right)\right)}^{2}} ;$ Eq. 2
   ${P}_{i} = {\sum }_{k = 1}^{m} \left({S}_{ix}+{S}_{iy}\right) ;$ Eq. 3
adjusting the attenuation ratios of the first attenuator and the second attenuator according to Eq. 4 and Eq. 5, so as to perform sub-frequency band power equalization,
wherein ${V}_{1} = \frac{{P}_{3}}{{P}_{2}} ;$ Eq. 4
   ${V}_{2} = \frac{{P}_{3}}{{P}_{1}} ,$ Eq. 5
where i takes a value of 1, 2, 3; i represents a sequence number of different sub-frequency band signals; m represents the maximum number of sampling points; P₁, P₂ and P₃ respectively represent intensity information corresponding to different sub-frequency band signals; V₁ represents the attenuation ratio of the first attenuator; and V₂ represents the attenuation ratio of the second attenuator.

In some embodiments, said performing multi-frequency bandwidth filtering on the first beat frequency electrical signal and the second beat frequency electrical signal, then calculating each sub-frequency band signal by using the first algorithm to obtain phase information of each sub-frequency band signal, and performing average superposition on the phase information to eliminate influence of interference fading, specifically comprises:
calculating Hilbert transformation on the first beat frequency electrical signal and the second beat frequency electrical signal point by point, to respectively obtain a X-polarization Hilbert transformation sequence and a Y-polarization Hilbert transformation sequence; and
respectively calculating arctangents of the Hilbert transformation sequence of the X-polarization and the Hilbert transformation sequence of the Y-polarization, and performing average superposition to obtain a final acoustic signal for outputting.

In some embodiments, said respectively calculating arctangents of the Hilbert transformation sequence of the X-polarization and the Hilbert transformation sequence of the Y-polarization, and performing average superposition to obtain the final acoustic signal for outputting comprises:
respectively obtaining the arctangents of the Hilbert transformation sequence of the X-polarization and the Hilbert transformation sequence of the Y-polarization according to Eq. 6 and Eq. 7,
wherein ${φ}_{ix} = arctan \left(\frac{H \left(X\left(k\right)\right)}{X \left(k\right)}\right) ;$ Eq. 6
   ${φ}_{iy} = arctan \left(\frac{H \left(Y\left(k\right)\right)}{Y \left(k\right)}\right) ;$ Eq. 7
performing average superposition to the arctangent *φᵢₓ* of the Hilbert transformation sequence of the X-polarization and the arctangent *φ_{iy}* of the Hilbert transformation sequence of the Y-polarization according to Eq. 8, so as to obtain the final acoustic signal for outputting,
wherein $φ = {\sum }_{i = 1}^{3} \frac{\left({φ}_{ix}+{φ}_{iy}\right)}{6} ;$ Eq. 8
where i takes a value of 1, 2, 3; and i represents a sequence number of different sub-frequency band signals.

### BRIEF DESCRIPTION OF THE DRAWINGS

In order to more clearly describe the technical solutions of the embodiments of the present disclosure or the prior art, the drawings required in the embodiments of the present disclosure 0r the prior art are briefly described below. Obviously, the drawings in the following description are some embodiments of the present disclosure, and for those skilled in the art, other drawings may also be obtained according to these drawings without any inventive labor.
FIG. 1 is an existing schematic structural diagram of an optical time-domain reflectometer according to an embodiment of the present disclosure.
FIG. 2 is a schematic structural diagram of an optical time-domain reflectometer according to an embodiment of the present disclosure.
FIG. 3 is a schematic structural diagram of a frequency-division multiplexing modulator of an optical time-domain reflectometer according to an embodiment of the present disclosure.
FIG. 4 is a specific schematic structural diagram of an optical time-domain reflectometer according to an embodiment of the present disclosure.
FIG. 5 is a schematic flow diagram of a method for eliminating interference fading according to an embodiment of the present disclosure.
FIG. 6 is a schematic diagram of an intermediate frequency signal intensity of a method for optical eliminating interference fading according to an embodiment of the present disclosure.
FIG. 7 is a schematic diagram of performing multi-frequency bandwidth filtering on a beat frequency electrical signal of a method for eliminating interference fading according to an embodiment of the present disclosure.
FIG. 8 is a schematic diagram of a processing flow of a signal acquisition and processing unit in a detection mode of a method for eliminating interference fading according to an embodiment of the present disclosure.
FIG. 9 is a schematic diagram of performing superposition for frequency band division signal of a method for eliminating interference fading according to an embodiment of the present disclosure.

### DETAILED DESCRIPTION

In order to make the objectives, technical solutions and advantages of the present disclosure clearer, the present disclosure will be further described in detail below with reference to the drawings and embodiments. It should be understood that the specific embodiments described herein are only used to explain the present disclosure and are not intended to limit the present disclosure.

The terms "first" and "second" in the present disclosure are only configured to describing purposes, and cannot be understood as indicating or implying relative importance or implicitly indicating the number of indicated technical features. Thus, the features defined as "first", "second" and so on may explicitly or implicitly include one or more of these features. In the description of the present disclosure, unless otherwise specified, the meaning of "a plurality of" refers to two or more.

In the present disclosure, unless otherwise specified and limited, the term "connection" should be broadly understood, for example, "connection" can be a fixed connection, a detachable connection, or an integrated one; it can be directly connected or indirectly connected through an intermediate medium. In addition, the technical features involved in various embodiments of the present disclosure described below can be combined with each other as long as they do not conflict with each other.

### Embodiment 1

Since a phase signal is linearly related to a disturbance signal, the disclosed phase-demodulated Φ-OTDR system can realize quantitative reduction of the disturbance signal. At present, most of the phase-demodulated Φ-OTDR system uses the coherent detection technology, and the basic principle thereof is modulating a narrow linewidth light source as a pulse signal and injecting it into a sensing optical fiber, mixing the reflected Rayleigh backscattering (RBS) optical signal with an intrinsic signal for performing coherent detection, and obtaining RBS phase information by using a suitable demodulation algorithm. The phase information obtained from the demodulation will be input to the signal processing unit for pattern recognition and event detection. In this phase-demodulated Φ-OTDR system, an interference fading effect will inevitably occur, which greatly deteriorates a signal-to-noise ratio of a fading point, and then causes severe distortion of the sensing information. The existing method for eliminating interference fading is to use frequency-division multiplexing technologies to perform phase reconstruction by using detection pulse signals of different optical frequencies, which can effectively eliminate interference fading. However, in order to obtain three detection pulse signals with different optical frequencies, the cost of the hardware used in the prior art is relatively high, and three acousto-optic modulators with different frequencies are needed for pulse modulation to realize an optical pulse output of three frequencies.

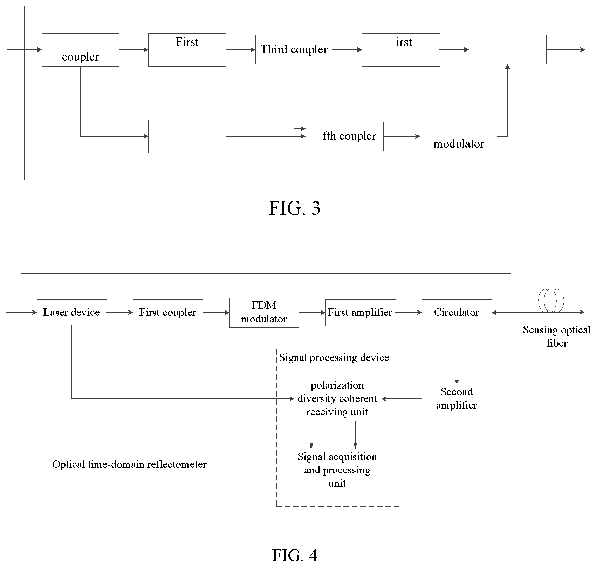

In order to reduce the cost and obtain a plurality of optical pulse outputs at a plurality of frequencies, the present embodiment provides an optical time-domain reflectometer. As shown in FIG. 2, the optical time-domain reflectometer is connected with a sensing optical fiber, and comprises a laser device, a frequency-division multiplexing modulator (FDM modulator), a circulator and a signal processing device. As shown in FIG. 3, the frequency-division multiplexing modulator comprises a first modulator, a second modulator, a first attenuator and a second attenuator. The laser device is configured to generate a coherent light source, and the coherent light source sequentially passes through the first modulator and the first attenuator, so as to obtain a first optical pulse signal. The coherent light source sequentially passes through the first modulator and the second modulator, so as to obtain a second optical pulse signal. The coherent light source sequentially passes through the second attenuator and the second modulator, so as to obtain a third optical pulse signal. The circulator is configured to respectively transmit the first optical pulse signal, the second optical pulse signal, and the third optical pulse signal to the sensing optical fiber, and the sensing optical fiber is configured to respectively generate corresponding reflected optical signals according to the first optical pulse signal, the second optical pulse signal, and the third optical pulse signal, and transmit the reflected optical signals to the signal processing device through the circulator for processing.

The laser device may be a narrow linewidth laser device, and the sensing optical fiber is a non-polarization-maintaining single-mode fiber, whose length can be set as 50 kilometers. Both the first modulator and the second modulator may be acousto-optic modulators. Acousto-optic modulation is an external modulation technology, and a device for controlling the intensity change of the laser beam is generally referred to as a modulator. The modulation signal acts on the transducer in a form of an electrical signal (amplitude modulation), and is then transformed into a wave field that changes in a form of an electrical signal, and then when a light wave passes through a medium, the optical carrier is modulated and become an intensity modulation wave that "carries" information.

A first port of the circulator is configured to respectively receive the first optical pulse signal, the second optical pulse signal and the third optical pulse signal, and a second port of the circulator is configured to transmit the first optical pulse signal, the second optical pulse signal, and the third optical pulse signal to the sensing optical fiber. The first pulse optical signal, the second pulse optical signal, and the third pulse optical signal obtain reflected optical signals from the sensing optical fiber, and the second port of the circulator is further configured to receive the reflected optical signals, and transmit the reflected optical signals to the signal processing device through a third port of the circulator. The signal processing device performs corresponding processing on the reflected optical signals, wherein a main process of the corresponding processing on the reflected optical signals by the signal processing device will be described hereinafter.

Compared with the prior art, the present embodiment has the following beneficial effects: on one hand, the present disclosure can realized the output of multi-path optical pulse signals through different combinations of the first modulator, the second modulator, the first attenuator and the second attenuator, and saves hardware cost compared with the prior art; compared with the prior art which requires three acousto-optic modulators, the present disclosure needs only two acousto-optic modulators to realize optical pulse outputs of three frequencies, which simplifies the hardware design and reduces the cost. On the other hand, the Φ-OTDR system which performing detection based on the first optical pulse signal, the second optical pulse signal, and the third optical pulse signal, can better resist signal degradation and noise and improve signal quality and system performance, so as to eliminate the influence caused by interference fading.

Next, the structure of the optical time-domain reflectometer will be specifically described. In a preferred embodiment, as shown in FIG. 4, the optical time-domain reflectometer further comprises a first coupler, a first amplifier and a second amplifier. An input end of the first coupler is connected with the laser device. One output end of the first coupler is connected with an input end of a frequency-division multiplexing modulator, and another output end of the first coupler is connected with the signal processing device. An input end of the first amplifier is connected with an output end of the frequency-division multiplexing modulator, and an output end of the first amplifier is connected with the first port of the circulator. An input end of the second amplifier is connected with the third port of the circulator, and an output end of the second amplifier is connected with the signal processing device.

The first coupler is configured to divide the coherent light source into a first optical signal and a second optical signal, wherein the first optical signal is transmitted to the frequency-division multiplexing modulator, and the second optical signal is transmitted to the signal processing device. The first amplifier is configured to amplify the first optical pulse signal, the second optical pulse signal, and the third optical pulse signal, and the amplified optical signals are transmitted to the circulator. The second amplifier is configured to amplify the reflected optical signal, and the amplified optical signal is transmitted to the signal processing device.

The function of the first coupler is to divide the coherent light source into two portions. The first optical signal is transmitted to the frequency-division multiplexing modulator for modulating the optical signal, so as to transmit a plurality of different frequencies of data in the optical fiber. The second optical signal is transmitted to the signal processing device, and the signal processing device is configured to performing analysis in combination with the second optical signal and the reflected optical signal, so as to analyze the properties of the optical fiber link or locate the fault point. The function of the first amplifier is to amplify the first optical pulse signal, the second optical pulse signal, and the third optical pulse signal, and the amplified signal is transmitted to the circulator. The function of the circulator is to separate incoming and outgoing signals, ensuring that the signals flow in the correct directions. The second amplifier is configured to amplify the reflected optical signal being reflected, to improve detection sensitivity of the signal processing device for further analysis. By transmitting an optical pulse signal and analyzing the reflected optical signal being reflected, the OTDR may determine a fault location, a loss, and other important properties in the optical fiber link.

In order to obtain the first optical pulse signal, the second optical pulse signal, and the third optical pulse signal, in a preferred embodiment, referring to FIG. 3, the frequency-division multiplexing modulator further comprises a second coupler, a third coupler, a fourth coupler, and a fifth coupler.

An input end of the second coupler is connected with the first coupler, and one output end of the second coupler is connected with an input end of the first modulator. An input end of the third coupler is connected with an output end of the first modulator, and one output end of the third coupler is connected with an input end of the first attenuator. An output end of the first attenuator is connected with one input end of the fourth coupler, and an output end of the fourth coupler is connected with the input end of the first amplifier. Another output end of the second coupler is connected with an input end of the second attenuator, and an output end of the second attenuator is connected with one input end of the fifth coupler. Another output end of the third coupler is connected with another input end of the fifth coupler, and an output end of the fifth coupler is connected with an input end of the second modulator. An output end of the second modulator is connected with another input end of the fourth coupler.

The second coupler is configured to divide the first optical signal into a third optical signal and a fourth optical signal, wherein the third optical signal sequentially passes through the first modulator, the third coupler, the first attenuator and the fourth coupler, so as to obtain the first optical pulse signal; the third optical signal sequentially passes through the first modulator, the third coupler, the fifth coupler, the second modulator, and the fourth coupler, so as to obtain the second optical pulse signal; and the fourth optical signal sequentially passes through the second attenuator, the fifth coupler, the second modulator, and the fourth coupler, so as to obtain the third optical pulse signal.

A path for generating the first optical pulse signal is that the third optical signal firstly passes through the first modulator, and the modulated third optical signal passes through the third coupler, then passes through the first attenuator, and finally passes through the fourth coupler, so as to obtain the first optical pulse signal.

A path for generating the second optical pulse signal is that the third optical signal sequentially passes through the first modulator and the third coupler, then passes through the fifth coupler, and then is further modulated by the second modulator, and finally passes through the fourth coupler, so as to obtain the second optical pulse signal.

A path for generating the third optical pulse signal is that the fourth optical signal firstly passes through the second attenuator, then passes through the fifth coupler, and then is further modulated by the second modulator, and finally passes through the fourth coupler, so as to obtain the third optical pulse signal.

The frequency-division multiplexing modulator generates a plurality of optical pulse signals with different frequencies. The optical communication for realizing high efficient frequency-division multiplexing is very important, so as to simultaneously transmit a plurality of different data streams on the same optical fiber, and each stream corresponds to a different optical signal property, whereby it is convenient to be configured to subsequently eliminate the effects caused by interference fading. After generating a plurality of optical pulse signals with different frequencies through the frequency-division multiplexing modulator, reflected optical signals respectively corresponding to each optical pulse signal (i.e. the first optical pulse signal, the second optical pulse signal, and the third optical pulse signal) are obtained via the circulator. Then, by processing the reflected optical signals through the signal processing device, the influence caused by interference fading can be eliminated. Meanwhile, a fault location, a loss, and other important properties in the optical fiber link can be determined by analyzing the reflected optical signals being reflected. A specific analysis method will be described in the following text.

In a preferred embodiment, referring to FIG. 4, the polarization diversity coherent receiving unit is configured to divide the reflected optical signals into two orthogonal X polarization optical signal and Y polarization optical signal; mix the X polarization optical signal with the second optical signal to obtain a X-polarization first beat frequency electrical signal, and mix the Y polarization optical signal with the second optical signal to obtain a Y-polarization second beat frequency electrical signal; and the signal acquisition and processing unit is configured to receive the first beat frequency electrical signal and the second beat frequency electrical signal in a calibration mode of the optical time-domain reflectometer, perform multi-frequency bandwidth filtering on the first beat frequency electrical signal and the second beat frequency electrical signal to obtain a plurality of sub-frequency band signals, and obtain intensity information of each sub-frequency band signal according to a first algorithm, and adjust attenuation ratios of the first attenuator and the second attenuator according to the intensity information. The signal acquisition and processing unit is further configured to, in a detection mode of the optical time-domain reflectometer, receive the first beat frequency electrical signal and the second beat frequency electrical signal, perform multi-frequency bandwidth filtering on the first beat frequency electrical signal and the second beat frequency electrical signal to obtain a plurality of sub-frequency band signals, respectively obtain phase signals of each sub-frequency band signal through the first algorithm, and perform average superposition to obtain a demodulated phase signal sequence.

The polarization diversity coherent receiving unit uses a polarization beam splitter to divide received RBS signals (i.e. reflected optical signal) into two orthogonally polarized optical signals: X polarization and Y polarization, and respectively perform coherent mixing with the input intrinsic light (i.e. second optical signal), and then perform balance reception, a working bandwidth thereof being AC-400M, so as to obtain the first beat frequency electrical signal and the second beat frequency electrical signal.

The optical time-domain reflectometer has the calibration mode and the detection mode. In the calibration mode, the signal acquisition and processing unit receives the first beat frequency electrical signal and the second beat frequency electrical signal from the polarization diversity coherent receiving unit, obtains intensity information of each sub-frequency band signal by using a Hilbert intensity demodulation algorithm (i.e. the first algorithm), adjusts the first attenuator and the second attenuator in the frequency-division multiplexing modulator according to the intensity information of each sub-frequency band signal, and performs power equalization on the intensity information of each sub-frequency band signal. The specific process thereof will be described in detail in the following text.

In the detection mode, the signal acquisition and processing unit receives the first beat frequency electrical signal and the second beat frequency electrical signal from the polarization diversity coherent receiving unit, obtains phase signals of two polarization states by using the Hilbert intensity demodulation algorithm, and performs average superposition to obtain a demodulated phase signal sequence, the specific process of which will be described in detail in the following text. Here, the sampling rate of the signal acquisition and processing unit is 245~255MSPS, and the quantization resolution is 12~16 bit.

In a preferred embodiment, a working frequency of the first modulator is f1, and a working frequency of the second modulator is f2, wherein the sum of f1 + f2 is smaller than a working bandwidth of the polarization diversity coherent receiving unit, and is smaller than a working bandwidth of the signal acquisition and processing unit, and f1 is not equal to f2.

It can be obtained from the structure of the frequency-division multiplexing modulator as shown in FIG. 3 that the purpose of this setting is to effectively distinguish the two channels of signals passing through the first modulator and the second modulator in the frequency domain, thereby avoiding interference caused by frequency overlap. By ensuring that the sum of f1 and f2 is smaller than the working bandwidths of the polarization diversity coherent receiving unit and the signal acquisition and processing unit, frequency aliasing can be avoided, ensuring that the signal can be accurately parsed and processed. Meanwhile, the condition that f1 is not equal to f2 ensures that two channels of signals have different frequency features, which is more favorable to their distinction in the frequency domain.

### Embodiment 2

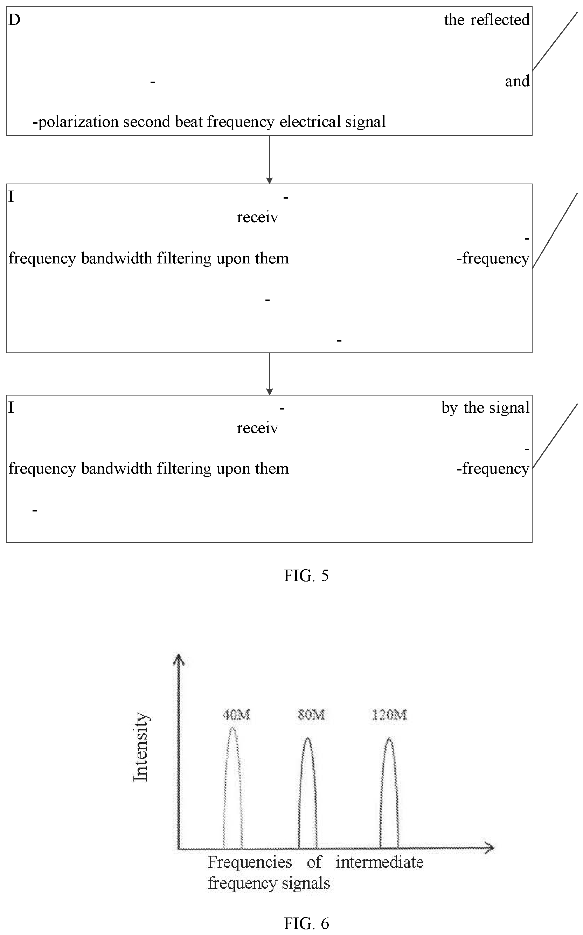

In the embodiment 1, an optical time-domain reflectometer is put forward, and in the present embodiment, a method for eliminating interference fading is put forward, as shown in FIG. 5, comprising: the signal processing device comprises a polarization diversity coherent receiving unit and a signal acquisition and processing unit;
Step 101: dividing, by the polarization diversity coherent receiving unit, the reflected optical signal into X polarization and Y polarization optical signals which are orthogonal, mixing the X polarization optical signal with the second optical signal to obtain a X-polarization first beat frequency electrical signal, and mixing the Y polarization optical signal with the second optical signal to obtain a Y-polarization second beat frequency electrical signal.

The polarization diversity coherent receiving unit uses a polarization beam splitter to divide the received RBS signals (i.e. reflected optical signals) into X-polarized and Y-polarized optical signals which are orthogonal, respectively performs coherent mixing with the input intrinsic light (i.e. the second optical signal), and performs balance reception, the working bandwidth thereof being AC-400M, so as to obtain the first beat frequency electrical signal and the second beat frequency electrical signal.

Step 102: in a calibration mode of the optical time-domain reflectometer, by the signal acquisition and processing unit, receiving the first beat frequency electrical signal and the second beat frequency electrical signal and performing multi-frequency bandwidth filtering upon them, then calculating each sub-frequency band signal obtained by filtering by using a first algorithm to obtain intensity information of each sub-frequency band signal, and adjusting attenuation ratios of the first attenuator and the second attenuator according to the intensity information, so as to balance sub-frequency band power.

The performing multi-frequency bandwidth filtering on the first beat frequency electrical signal and the second beat frequency electrical signal comprises: performing multi-frequency bandwidth filtering on the first beat frequency electrical signal and the second beat frequency electrical signal, so as to obtain a plurality of sub-frequency band signals through three intermediate frequency filters whose center frequencies are respectively a working frequency f1 of the first modulator, a working frequency f2 of the second modulator, and the working frequency f1 of the first modulator + the working frequency f2 of the second modulator. That is, the first beat frequency electrical signal is filtered respectively through the intermediate frequency filters with different center frequencies, and the second beat frequency electrical signal is also filtered by the intermediate frequency filters with different center frequencies. As shown in FIG. 6, the center frequencies of the intermediate frequency filters are 40MHz, 80MHz, and 120MHz, respectively.

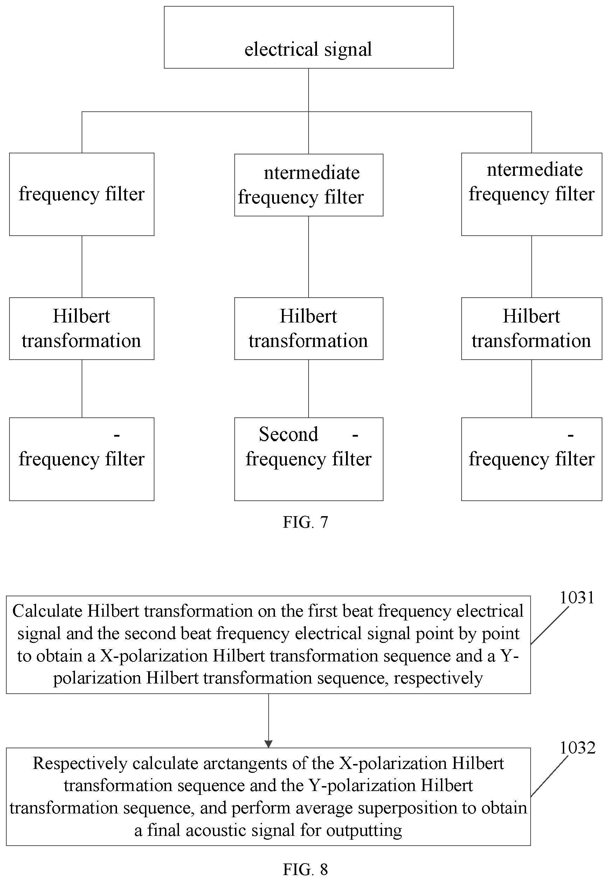

As shown in FIG. 7, multi-frequency bandwidth filtering is performed on the first beat frequency electrical signal and the second beat frequency electrical signal, respectively. Each signal is decomposed into a plurality of sub-frequency bands, each of which covers a different frequency range. The purpose of this is to perform more detailed analysis at different frequencies for the signal. The specific mode is as follows:
in the calibration mode of the optical time-domain reflectometer, the signal acquisition and processing unit acquires a first beat frequency electrical signal {x(k); k=1,....,m} and a second beat frequency electrical signal {x(k); and k=1,....,m};
where k represents a number of sampling points, and m represents a maximum number of sampling points.

All the first beat frequency electrical signals and the second beat frequency electrical signals are sorted according to time and are established a one-to-one correspondence between them.

Sub-frequency band filtering is respectively performed on the first beat frequency electrical signal and the second beat frequency electrical signal, and performed Hilbert transformation on the first beat frequency electrical signal and the second beat frequency electrical signal point by point to obtain sub-frequency band signals {H(x(k)); k=1,..., m} and {H(y(k)); and k=1,...,m}, and the intensity information Pi is obtained according to Eq. 1, Eq. 2, and Eq. 3,
wherein ${S}_{ix} = \sqrt{{\left(H\left(X\left(k\right)\right)\right)}^{2} + {\left(X\left(k\right)\right)}^{2}} ;$ Eq. 1
${S}_{iy} = \sqrt{{\left(H\left(Y\left(k\right)\right)\right)}^{2} + {\left(Y\left(k\right)\right)}^{2}} ;$ Eq. 2
${P}_{i} = {\sum }_{k = 1}^{m} \left({S}_{ix}+{S}_{iy}\right) ;$ Eq. 3

The attenuation ratios of the first attenuator and the second attenuator are adjusted according to Eq. 4 and Eq. 5, so as to perform sub-frequency band power equalization,
wherein ${V}_{1} = \frac{{P}_{3}}{{P}_{2}} ;$ Eq. 4
${V}_{2} = \frac{{P}_{3}}{{P}_{1}} ,$ Eq. 5
where i takes a value of 1, 2, 3; i represents a sequence number of different sub-frequency band signals; m represents the maximum number of sampling points; P₁, P₂ and P₃ respectively represent intensity information corresponding to different sub-frequency band signals; V₁ represents the attenuation ratio of the first attenuator; and V₂ represents the attenuation ratio of the second attenuator.

The sampling rate of the signal acquisition unit is 250 MSPS, the unit length of each sampling point is about 0.4m, and the total sampling length is 50km.

By adjusting the attenuation ratios of the first attenuator and the second attenuator, it is ensured that the power levels of signals at different frequency bands are consistent and meet specific requirements. This is used to ensure that the optical time-domain reflectometer can work at the same efficiency and precision in different frequency bands. By this calibration process, it can be ensured that the measurement results of the OTDR on each frequency band are accurate and consistent, thereby improving the performance and reliability of the entire system. It is very important for subsequent optical fiber detection and fault diagnosis work, because signals of different frequency bands may exhibit different reflection features due to different properties in the optical fiber.

Step 103: in a detection mode of the optical time-domain reflectometer, by the signal acquisition and processing unit, receiving the first beat frequency electrical signal and the second beat frequency electrical signal and performing multi-frequency bandwidth filtering upon them, then calculating each sub-frequency band signal by using a first algorithm to obtain phase information of each sub-frequency band signal, and performing average superposition on the phase information to eliminate influence of interference fading.

In the detection mode, the signal acquisition and processing unit firstly collects the first beat frequency electrical signal {x(k); k=1,...,125000} and the second beat frequency electrical signal {y(k); and k=1,...,125000}, where K represents the number of sampling points, the value of m is 125,000, the sampling rate of the signal acquisition unit is 250MSPS, the unit length of each sampling point is about 0.4m, and the total sampling length is 50km, and all the first and second beat frequency electrical signals are sorted according to time and are established the one-to-one correspondence between them.

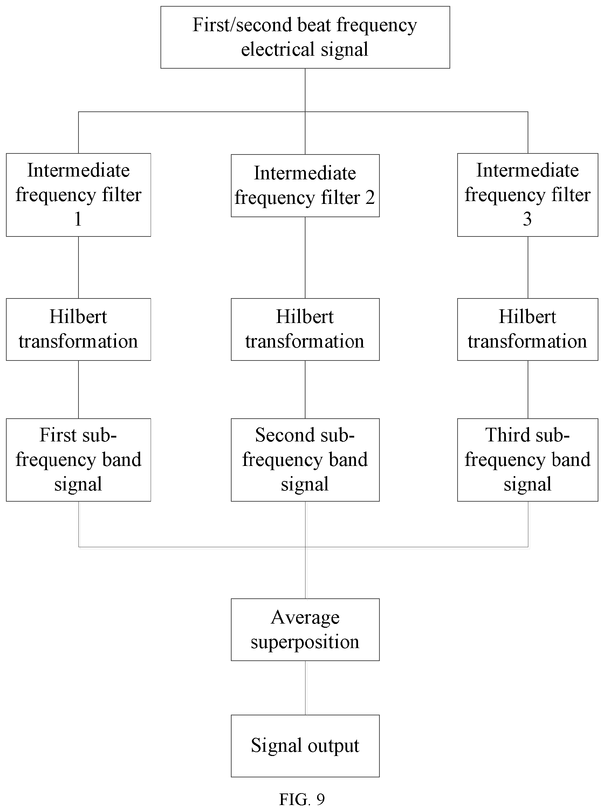

In a preferred embodiment, as shown in FIGS. 8 and 9, the Step 103 specifically comprises:
Step 1031: calculating Hilbert transformation on the first beat frequency electrical signal and the second beat frequency electrical signal point by point to obtain a X-polarization Hilbert transformation sequence and a Y-polarization Hilbert transformation sequence, respectively. Here, the sub-frequency band filtering is performed respectively on the first beat frequency electrical signal and the second beat frequency electrical signal, and the center frequencies of the intermediate frequency filters are 40MHz, 80MHz, and 120MHz, respectively. The value of m is 125000, and the first beat frequency electrical signal and the second beat frequency electrical signal are calculated Hilbert transformation point by point, obtaining the X-polarization Hilbert transformation sequence {H(x(k); k=1,....,125000} and the Y-polarization Hilbert transformation sequence {H(y(k)); k=1,....,125000}.
Step 1032: respectively calculating arctangents of the X-polarization Hilbert transformation sequence and the Y-polarization Hilbert transformation sequence, and performing average superposition to obtain a final acoustic signal for outputting.

The arctangents of the X-polarization Hilbert transformation sequence the Y-polarization Hilbert transformation sequence are respectively obtained according to Eq. 6 and Eq.7,
wherein ${φ}_{ix} = arctan \left(\frac{H \left(X\left(k\right)\right)}{X \left(k\right)}\right) ;$ Eq. 6
${φ}_{iy} = arctan \left(\frac{H \left(Y\left(k\right)\right)}{Y \left(k\right)}\right) ;$ Eq. 7
the arctangent *φᵢₓ* of the X-polarization Hilbert transformation sequence and the arctangent *φ_{iy}* of the Y-polarization Hilbert transformation sequence are performed average superposition according to Eq. 8, so as to obtain the final acoustic signal for outputting,
wherein $φ = {\sum }_{i = 1}^{3} \frac{\left({φ}_{ix}+{φ}_{iy}\right)}{6} ;$ Eq. 8
where i takes value of 1, 2, 3; and i represents a sequence number of different sub-frequency band signals.

By further analyzing and processing the final acoustic signal, the properties of the signal detected by the optical time-domain reflectometer can be identified, and meanwhile, by performing average superposition to the phase information of different frequency bands, the influence of such interference fading can be effectively reduced, thereby improving the quality and reliability of the signal. The advantages of multi-band processing and phase information analysis are used, and the precision and efficiency of the optical time-domain reflectometer in optical fiber link detection and fault diagnosis are improved. By such advanced signal processing, the damages, fractures, or other problems in the optical fiber can be more accurately located.

For a specific structure of the optical time-domain reflectometer, it can be referred to the embodiment 1, and details are not described in the present embodiment again.

The foregoing embodiments are merely preferred embodiments of the present disclosure, and are not intended to limit the present disclosure, and any modifications, equivalent replacements, improvements, etc. made within the spirit and principles of the present disclosure shall be included within the scope of protection of present disclosure.

## Claims

1. An optical time-domain reflectometer, **characterized in that** the optical time-domain reflectometer is connected with a sensing optical fiber, comprising: a laser device, a frequency-division multiplexing modulator, a circulator and a signal processing device, and the frequency-division multiplexing modulator comprises a first modulator, a second modulator, a first attenuator and a second attenuator;
wherein the laser device is configured to generate a coherent light source, and the coherent light source passes sequentially through the first modulator and the first attenuator, so as to obtain a first optical pulse signal; the coherent light source sequentially passes through the first modulator and the second modulator, so as to obtain a second optical pulse signal; the coherent light source sequentially passes through the second attenuator and the second modulator, so as to obtain a third optical pulse signal; and
the circulator is configured to transmit the first optical pulse signal, the second optical pulse signal, and the third optical pulse signal to the sensing optical fiber, and the sensing optical fiber is configured to generate corresponding reflected optical signals according to the first optical pulse signal, the second optical pulse signal, and the third optical pulse signal, and transmit the reflected optical signals to the signal processing device through the circulator for processing.

2. The optical time-domain reflectometer of claim 1, **characterized in that** a first port of the circulator is configured to respectively receive the first optical pulse signal, the second optical pulse signal and the third optical pulse signal, and a second port of the circulator is configured to transmit the first optical pulse signal, the second optical pulse signal, and the third optical pulse signal to the sensing optical fiber; and
the first, second, and third optical pulse signals are reflected, by the sensing optical fiber, to obtain the reflected optical signals, and the second port of the circulator is further configured to receive the reflected optical signals, and transmit the reflected optical signals to the signal processing device through a third port of the circulator, and then the signal processing device performs corresponding processing on the reflected optical signals.

3. The optical time-domain reflectometer of claim 1, **characterized in that** the optical time-domain reflectometer further comprises a first coupler, a first amplifier and a second amplifier;
wherein the first coupler is configured to divide the coherent light source into a first optical signal which is transmitted to the frequency-division multiplexing modulator, and a second optical signal which is transmitted to the signal processing device;
the first amplifier is configured to amplify the first optical pulse signal, the second optical pulse signal, and the third optical pulse signal, transmitting the amplified optical signals to the circulator; and
the second amplifier is configured to amplify the reflected optical signals, transmitting the amplified optical signals to the signal processing device.

4. The optical time-domain reflectometer of claim 3, **characterized in that** an input end of the first coupler is connected with the laser device, and one output end of the first coupler is connected with an input end of the frequency-division multiplexing modulator, while another output end of the first coupler is connected with the signal processing device;
an input end of the first amplifier is connected with an output end of the frequency-division multiplexing modulator, and an output end of the first amplifier is connected with a first port of the circulator; and
an input end of the second amplifier is connected with a third port of the circulator, and an output end of the second amplifier is connected with the signal processing device.

5. The optical time-domain reflectometer of claim 3, **characterized in that** the frequency-division multiplexing modulator further comprises a second coupler, a third coupler, a fourth coupler, and a fifth coupler;
wherein the second coupler is configured to divide the first optical signal into a third optical signal and a fourth optical signal, wherein the third optical signal sequentially passes through the first modulator, the third coupler, the first attenuator and the fourth coupler, so as to obtain the first optical pulse signal;
the third optical signal sequentially passes through the first modulator, the third coupler, the fifth coupler, the second modulator, and the fourth coupler, so as to obtain the second optical pulse signal; and
the fourth optical signal sequentially passes through the second attenuator, the fifth coupler, the second modulator, and the fourth coupler, so as to obtain the third optical pulse signal.

6. The optical time-domain reflectometer of claim 5, **characterized in that** an input end of the second coupler is connected with the first coupler, and one output end of the second coupler is connected with an input end of the first modulator; an input end of the third coupler is connected with an output end of the first modulator, and one output end of the third coupler is connected with an input end of the first attenuator; an output end of the first attenuator is connected with one input end of the fourth coupler, and an output end of the fourth coupler is connected with an input end of the first amplifier; and
another output end of the second coupler is connected with an input end of the second attenuator, and an output end of the second attenuator is connected with one input end of the fifth coupler; another output end of the third coupler is connected with another input end of the fifth coupler, and an output end of the fifth coupler is connected with an input end of the second modulator; and an output end of the second modulator is connected with another input end of the fourth coupler.

7. The optical time-domain reflectometer of claim 5, **characterized in that** a path for generating the first optical pulse signal is that the third optical signal firstly passes through the first modulator, and the modulated third optical signal passes through the third coupler, then passes through the first attenuator, and finally passes through the fourth coupler, so as to obtain the first optical pulse signal;
a path for generating the second optical pulse signal is that the third optical signal sequentially passes through the first modulator and the third coupler, then passes through the fifth coupler, and then passes through the second modulator to be further modulated, and finally passes through the fourth coupler, so as to obtain the second optical pulse signal; and
a path for generating the third optical pulse signal is that the fourth optical signal firstly passes through the second attenuator, then passes through the fifth coupler, and then passes through the second modulator to be further modulated, and finally passes through the fourth coupler, so as to obtain the third optical pulse signal.

8. The optical time-domain reflectometer of claim 3, **characterized in that** the signal processing device comprises a polarization diversity coherent receiving unit and a signal acquisition and processing unit;
the polarization diversity coherent receiving unit is configured to divide the reflected optical signals into X polarization and Y polarization optical signals which are orthogonal; mix the X polarization optical signal with the second optical signal to obtain a X-polarization first beat frequency electrical signal, and mix the Y polarization optical signal with the second optical signal to obtain a Y-polarization second beat frequency electrical signal;
the signal acquisition and processing unit is configured to, in a calibration mode of the optical time-domain reflectometer receive the first beat frequency electrical signal and the second beat frequency electrical signal, perform multi-frequency bandwidth filtering on the first beat frequency electrical signal and the second beat frequency electrical signal to obtain a plurality of sub-frequency band signals, obtain intensity information of each sub-frequency band signal according to a first algorithm, and adjust attenuation ratios of the first attenuator and the second attenuator according to the intensity information; and
the signal acquisition and processing unit is further configured to, in a detection mode of the optical time-domain reflectometer receive the first beat frequency electrical signal and the second beat frequency electrical signal, perform multi-frequency bandwidth filtering on the first beat frequency electrical signal and the second beat frequency electrical signal to obtain a plurality of sub-frequency band signals, respectively obtain phase signals of each sub-frequency band signal through the first algorithm, and perform average superposition on the phase signals to obtain a demodulated phase signal sequence.

9. The optical time-domain reflectometer of claim 8, **characterized in that** a sampling rate of the signal acquisition and processing unit are 245~255MSPS, and a quantization resolution is 12~16 bit.

10. The optical time-domain reflectometer of claim 8, **characterized in that** a working frequency of the first modulator is f1, and a working frequency of the second modulator is f2, wherein a sum of f1 + f2 is smaller than a working bandwidth of the polarization diversity coherent receiving unit, and is further smaller than a working bandwidth of the signal acquisition and processing unit, and f1 is not equal to f2.

11. A method for eliminating interference fading, **characterized in that**, the method is applied to the optical time-domain reflectometer of any one of claims 1-10, the signal processing device comprising a polarization diversity coherent receiving unit and a signal acquisition and processing unit; and the method for eliminating interference fading comprises:
dividing the reflected optical signal into X polarization and Y polarization optical signals which are orthogonal; mixing the X polarization optical signal with the second optical signal to obtain a X-polarization first beat frequency electrical signal, and mixing the Y polarization optical signal with the second optical signal to obtain a Y-polarization second beat frequency electrical signal;
in a calibration mode of the optical time-domain reflectometer, by the signal acquisition and processing unit, receiving and performing multi-frequency bandwidth filtering on the first beat frequency electrical signal and the second beat frequency electrical signal, then calculating, by using a first algorithm, each sub-frequency band signal obtained by filtering to obtain intensity information of each sub-frequency band signal, and adjusting attenuation ratios of the first and second attenuators according to the intensity information, so as to perform sub-frequency band power equalization; and
in a detection mode of the optical time-domain reflectometer, by the signal acquisition and processing unit, receiving and performing multi-frequency bandwidth filtering on the first beat frequency electrical signal and the second beat frequency electrical signal , then calculating each sub-frequency band signal by using the first algorithm to obtain phase information of each sub-frequency band signal, and performing average superposition on the phase information to eliminate influence of interference fading.

12. The method for eliminating interference fading of claim 11, **characterized in that**, the performing multi-frequency bandwidth filtering on the first beat frequency electrical signal and the second beat frequency electrical signal comprises:
performing multi-frequency bandwidth filtering on the first beat frequency electrical signal and the second beat frequency electrical signal so as to obtain a plurality of sub-frequency band signals, by three intermediate frequency filters whose center frequencies are respectively a working frequency f1 of the first modulator, a working frequency f2 of the second modulator, and a working frequency f1 of the first modulator + the working frequency f2 of the second modulator.

13. The method for eliminating interference fading of claim 11, **characterized in that**, said in a calibration mode of the optical time-domain reflectometer, by the signal acquisition and processing unit, receiving and performing multi-frequency bandwidth filtering on the first beat frequency electrical signal and the second beat frequency electrical signal, then calculating, by using a first algorithm, each sub-frequency band signal obtained by filtering to obtain intensity information of each sub-frequency band signal, and adjusting attenuation ratios of the first attenuator and the second attenuator according to the intensity information, so as to perform sub-frequency band power equalization, specifically comprises:
in the calibration mode of the optical time-domain reflectometer, by the signal acquisition and processing unit, collecting a first beat frequency electrical signal {x(k); k=1,....,m} and a second beat frequency electrical signal {x(k); and k=1,....,m}, where k represents a number of sampling points, and m represents a maximum number of sampling points;
sorting all the first beat frequency electrical signals and the second beat frequency electrical signals by time and establishing a one-to-one correspondence between them;
performing sub-frequency band filtering respectively on the first beat frequency electrical signal and the second beat frequency electrical signal, and performing Hilbert transformation on the first beat frequency electrical signal and the second beat frequency electrical signal point by point to obtain sub-frequency band signals {H(x(k)); k=1,..., m} and {H(y(k)); and k=1,...,m}, and obtaining the intensity information Pi according to Eq. 1, Eq. 2, and Eq. 3,
wherein ${S}_{ix} = \sqrt{{\left(H\left(X\left(k\right)\right)\right)}^{2} + {\left(X\left(k\right)\right)}^{2}} ;$ Eq. 1 ${S}_{iy} = \sqrt{{\left(H\left(Y\left(k\right)\right)\right)}^{2} + {\left(Y\left(k\right)\right)}^{2}} ;$ Eq. 2 and ${P}_{i} = {\sum }_{k = 1}^{m} \left({S}_{ix}+{S}_{iy}\right) ;$ Eq. 3
adjusting attenuation ratios of the first attenuator and the second attenuator according to Eq. 4 and Eq. 5, so as to perform sub-frequency band power equalization,
wherein ${V}_{1} = \frac{{P}_{3}}{{P}_{2}} ;$ Eq. 4 ${V}_{2} = \frac{{P}_{3}}{{P}_{1}} ,$ Eq. 5
where i takes a value of 1, 2, 3; i represents a sequence number of different sub-frequency band signals; m represents the maximum number of sampling points; P₁, P₂ and P₃ respectively represent intensity information corresponding to different sub-frequency band signals; V₁ represents the attenuation ratio of the first attenuator; and V₂ represents the attenuation ratio of the second attenuator.

14. The method for eliminating interference fading of claim 11, **characterized in that**, said performing multi-frequency bandwidth filtering on the first beat frequency electrical signal and the second beat frequency electrical signal, then calculating each sub-frequency band signal by using a first algorithm to obtain phase information of each sub-frequency band signal, and performing average superposition on the phase information to eliminate influence of interference fading, specifically comprises:
calculating Hilbert transformation on the first beat frequency electrical signal and the second beat frequency electrical signal point by point to respectively obtain a X-polarization Hilbert transformation sequence and a Y-polarization Hilbert transformation sequence; and
respectively calculating arctangents of the X-polarization Hilbert transformation sequence and the Y-polarization Hilbert transformation sequence, and performing average superposition to obtain a final acoustic signal for outputting.

15. The method for eliminating interference fading of claim 14, **characterized in that**, the respectively calculating arctangents of the X-polarization Hilbert transformation sequence and the Y-polarization Hilbert transformation sequence, and performing average superposition to obtain a final acoustic signal for outputting, comprises:
respectively obtaining the arctangents of the X-polarization Hilbert transformation sequence and the Y-polarization Hilbert transformation sequence according to Eq. 6 and Eq. 7,
wherein ${φ}_{ix} = arctan \left(\frac{H \left(X\left(k\right)\right)}{X \left(k\right)}\right) ;$ Eq. 6 ${φ}_{iy} = arctan \left(\frac{H \left(Y\left(k\right)\right)}{Y \left(k\right)}\right) ;$ Eq. 7
performing average superposition to the arctangent φᵢₓ of the X-polarization Hilbert transformation sequence and the arctangent φ_{iy} of the Y-polarization Hilbert transformation sequence according to Eq. 8, so as to obtain the final acoustic signal,
wherein $φ = {\sum }_{i = 1}^{3} \frac{\left({φ}_{ix}+{φ}_{iy}\right)}{6} ,$ Eq. 8 where i takes value of 1, 2, 3; and i represents a sequence number of different sub-frequency band signals.
